# EUROPEAN PATENT APPLICATION

(11) **EP 2 201 908 A1**
(43) Date of publication of application: **30.06.2010**
(21) Application number: 07822928.3
(22) Date of filing: 18.09.2007
(51) Int. Cl.: A61C 8/00

(54) **SUPPORT FOR A TEMPORARY DENTAL CROWN**

(30) Priority: 31.08.2007 ES 200702362
(71) Applicant: Garcia Saban, Francisco Javier, 08211 Castellar del Valles, Barcelona (ES); Garcia Saban, Juan Carlos, 08211 Castellar del Valles, Barcelona (ES); Garcia Saban, Miguel Angel, 08211 Castellar del Valles, Barcelona (ES)
(72) Inventor: Garcia Saban, Francisco Javier, 08211 Castellar del Valles, Barcelona (ES); Garcia Saban, Juan Carlos, 08211 Castellar del Valles, Barcelona (ES); Garcia Saban, Miguel Angel, 08211 Castellar del Valles, Barcelona (ES)
(74) Representative: Carpintero Lopez, Francisco
(86) International application number: PCT/ES2007/000521
(87) International publication number: WO 2009/030784

(57) **Abstract**

The invention relates to a support (1) for non-definitively fixing a temporary crown (8) of one or several teeth to a pillar (3) which is in turn fixed on a dental implant (4) inserted into the bone structure of the patient, and which has additional means for clip retaining to said pillar (3) and mechanical retaining elements (9, 10, 11) preventing both the axial and rotational movement of the temporary dental crown (8), which complement the irremovable connection thereof by means of the bonding or sealing of said temporary dental crown (8).

## Description

### Object of the Invention

The object of the present invention patent application is a support intended to provide the patient who receives dental implants with temporary teeth anchored on implants in the same surgical act in which said implants are inserted.

More specifically, the object of the invention is a support for a temporary crown of one or several teeth which allows temporarily fixing them to a pillar which is turn fixed on the dental implant inserted into the bone structure of the patient.

### Background of the Invention

Dental implantology techniques are currently widespread, their use and acceptance by both professionals and patients being common. Said techniques allow replacing tooth roots by means of implants to which the corresponding prostheses are in turn coupled.

The phases for implanting said implants are generally summarized in an initial implantation phase, followed by an immediate subsequent osseointegration phase involving a waiting time until the last phase, which is the definitive prosthesis fixing phase.

Said osseointegration time period between the insertion of the implant and the installation of the definitive prosthesis can last between 2 and 6 months depending on the case, a time during which the patient does not have normal teeth aesthetics since he or she has neither natural nor artificial teeth.

This is evidently a serious problem for the patient, whose personal image as well as the normal masticatory function is seriously affected.

To solve these problems, elements and methods have appeared in the field of dental implantology which are intended to attempt providing the patient with temporary teeth which are fixed on the implants and which, once the osseointegration time thereof has ended, can be easily removed to place the definitive prostheses.

However, the methods and elements used do not always give an optimal result, since in some cases the operation for fixing or removing the temporary crown or prosthesis to the implant becomes a complicated task, and in other cases said temporary crown or prosthesis is not correctly fixed, as in the cases in which there is only a retention by screwing, experiencing axial and rotational shifts which do not prevent friction.

### Description of the Invention

The support for a temporary dental crown of the invention described below solves the aforementioned drawbacks since, on one hand, it is an element which facilitates and simplifies placing and removing the temporary crown and, on the other hand, prevents the axial and rotational shifts thereof, aiding in the correct transmission of load forces to the bone and thus in the biostimulation of the bone repair system at the implant level.

Thus, more specifically, the support for a temporary dental crown of the invention will thus be involved in the implantation process as follows:

Once the implant or implants are fixed in the bone structure of the patient and a pillar, preferably made of titanium, is fixed thereon with a threaded screw, the soft tissue located around this connection is sutured for the purpose of preventing the invasion of said tissue on the shoulder of the implant or of the pillar, after which time the support of the invention may already be placed or fixed on the mentioned pillar to then connect the temporary dental crown on the actual support by means of other fixing means, which will create an integral connection between the support of the invention and the temporary dental crown.

Therefore, the support for a dental crown of the invention comprises, on one hand, non-definitive fixing means for fixing to the pillar screwed to the implant, and on the other hand, means facilitating the irremovable connection to the temporary dental crown.

More specifically, the support of the invention, having a slightly frustoconical structure with open bases, is fixed to the titanium pillar, which is turn fixed with a through bolt to the implant, through the following means:
- A main quick clip retaining system; and
- A retention by a through bolt.

Both these fixing means are non-definitive, i.e., they allow subsequently removing or releasing them when the temporary dental crown is to be removed, for example, to place the definitive crown.

In relation to the connection of the support of the invention to the temporary dental crown, it is achieved as a result of incorporating, in the periphery of said support, a series of mechanical retaining elements preventing both the axial and rotational shift or movement of said connection of the crown to the support.

More specifically, said retaining elements are formed by a series of circumferential notches or recesses located at different heights, in which the material used in the bonding or sealing for the definitive connection of the temporary crown with the shape of the tooth and the outer surface of the support of the invention which, after the bonding material has set, form a single piece, will be housed.

Thus, once the temporary crown and support assembly is positioned on the titanium pillar fixed to the implant, the assembly already fulfills the temporary aesthetic functionality, and, in the event that the dentist or professional considers it appropriate, it may even fulfill a masticatory functionality.

### Description of the Drawings

To complement the description which is being made and for the purpose of aiding to better understand the features of the invention according to a preferred practical embodiment thereof, a set of drawings is attached as an integral part of said description, in which the following has been depicted with an illustrative and non-limiting character:
Figure 1 shows several views of the support for a temporary dental crown of the present invention.

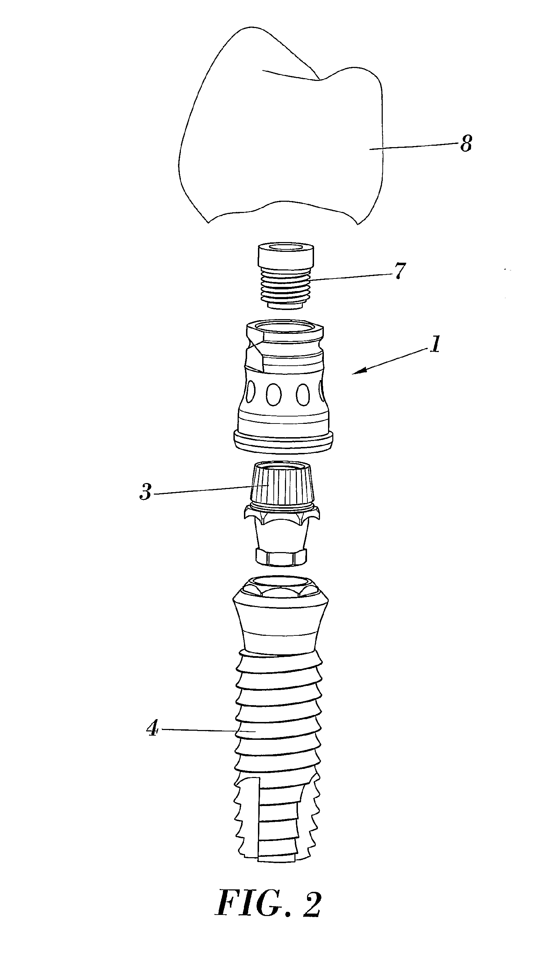

Figure 2 shows an exploded perspective view of the elements involved in placing the temporary dental crown, which include the support of the previous figure.

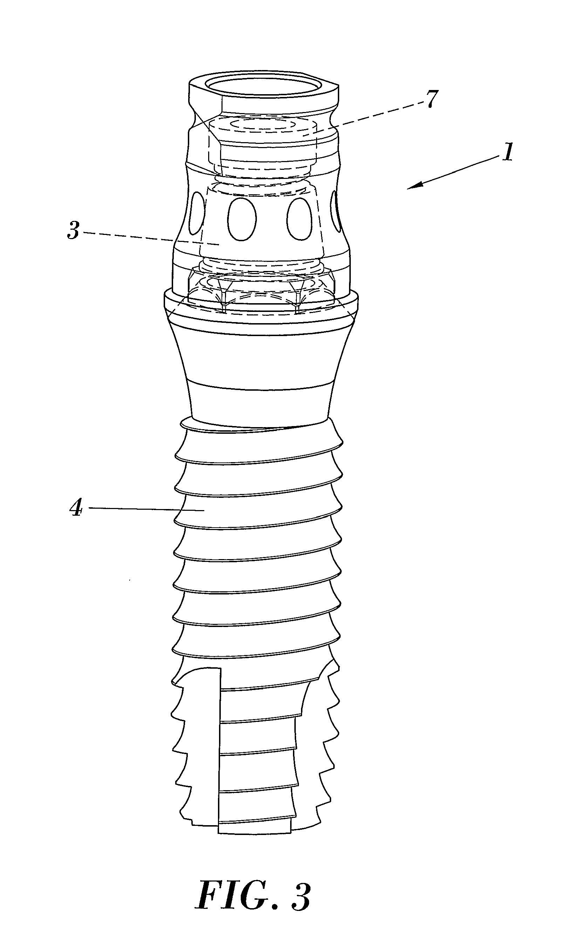

Figure 3 shows a perspective view of the assembled assembly of the previous figure anterior in an operative position.
Figure 4 shows a cutaway view of the connection means between the support of the invention and the pillar screwed to the implant.

### Preferred Embodiment of the Invention

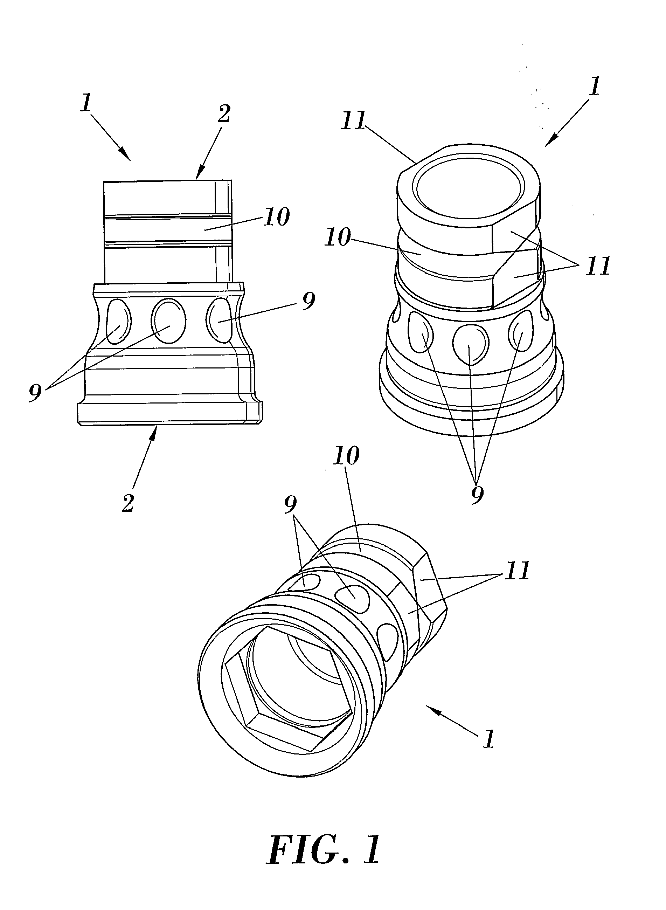

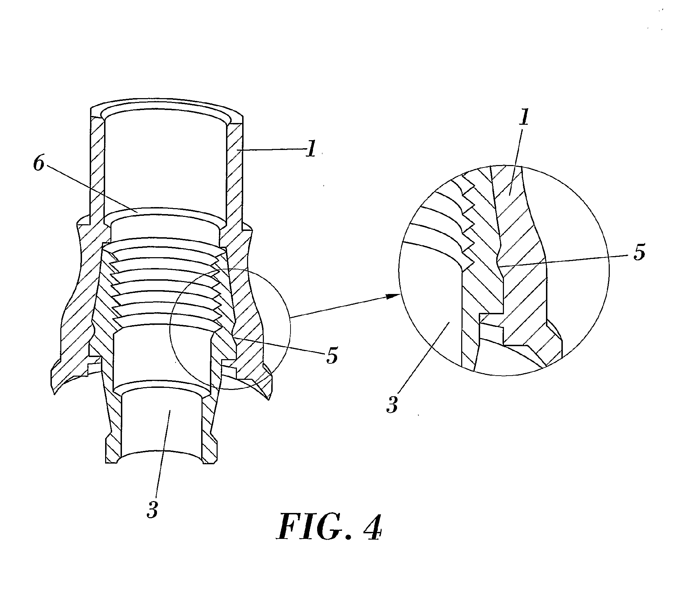

In view of the figures, in which a possible embodiment of the support (1) of the invention is observed, it is observed how such support, as can be seen in Figures 1 and 4, has a frustoconical structure with open bases (2), in which the fixing means for fixing to the titanium pillar (3), which is in turn fixed to the implant (4) by means of a through bolt, not shown, are formed by a diametric tongue and groove system (5) located in its inner wall at a height such that the head of said pillar (3) is located immediately below an inner step (6) serving as a stop to the head of the through bolt (7) used for the final retention of the assembly.

These fixing means, as already mentioned, are not definitive, i.e., they will allow subsequently removing or releasing them when the temporary dental crown (8) is to be removed.

On the other hand, and as can also be seen in the figures, the definitive connection between the support (1) of the invention and the temporary dental crown (8) comprises mechanical retaining elements (9, 10 and 11) preventing both the axial and rotational shift or movement of said connection of the temporary crown (8) on the support (1) once they have been definitively connected by bonding or sealing by means of, for example, an acrylic resin in semi-liquid phase.

More specifically, and according to a possible embodiment of the invention, said retaining elements are formed by:
- perimetric notches (9) consisting of equiangularly distributed indentations preventing the rotational shift of the temporary dental crown (8) on the support (1); on which there is located
- at least one perimetric recess (10) preventing the axial shift of the temporary dental crown (8) on the support (1); and intersecting:

- at least two diametrically opposite axial and parallel planar cuts (11) preventing the rotational shift of the temporary dental crown (8) on the support (1).

## Claims

1. Support (1) for a temporary dental crown (8) intended to be fixed to the pillar (3) of an implant (4) in a non-definitive manner by means of a through bolt (7), and in an irremovable manner to the temporary dental crown (8) by means of bonding or sealing, **characterized in that** it comprises a clip retaining system as additional non-definitive fixing means for fixing to the pillar (3), and **in that** it further comprises mechanical retaining elements (9, 10, 11) preventing both the axial and rotational movement of the temporary dental crown (8).

2. Support (1) for a temporary dental crown (8) according to claim 1, **characterized in that** the clip retaining system as additional non-definitive fixing means for fixing to the pillar (3) is formed by a diametric tongue and groove system (5) located in its inner wall.

3. Support (1) for a temporary dental crown (8) according to claim 2, **characterized in that** the diametric tongue and groove system (5) is located at a such a height of its inner wall that the head of the pillar (3) is located immediately below an inner step (6) serving as a stop to the head of the through bolt (7).

4. Support (1) for a temporary dental crown (8) according to claim 1, **characterized in that** the mechanical retaining elements (9, 10, 11) comprise:
- perimetric notches (9) preventing the rotational shift of the temporary dental crown (8);
- at least one perimetric recess (10) preventing the axial shift of the temporary dental crown (8); and
- at least two diametrically opposite axial and parallel planar cuts (11) preventing the rotational shift of the temporary dental crown (8).

5. Support (1) for a temporary dental crown (8) according to claim 4, **characterized in that** the perimetric notches (9) are equiangularly distributed indentations.

6. Support (1) for a temporary dental crown (8) according to claims 4 and 5, **characterized in that** the perimetric recess (10) is located on the perimetric notches (9).

7. Support (1) for a temporary dental crown (8) according to claims 4 to 6, **characterized in that** the perimetric recess (10) intersects the two axial and parallel planar cuts (11).

8. Support (1) for a temporary dental crown (8) according to claim 1, **characterized in that** it has a slightly frustoconical structure with open bases (2).
